Europäisches Patentamt

European Patent Office

Office européen des brevets

(19)

(11) Veröffentlichungsnummer: **0 115 092**
**B1**

(12)

# EUROPÄISCHE PATENTSCHRIFT

(45) Veröffentlichungstag der Patentschrift:
12.08.87

(21) Anmeldenummer: 83200173.9

(22) Anmeldetag: 01.02.83

(51) Int. Cl.⁴: **C 22 F 1/10, C 21 D 1/42**

(54) **Bauteil mit hoher Korrosions- und Oxydationsbeständigkeit, bestehend aus einer dispersionsgehärteten Superlegierung und Verfahren zu dessen Herstellung.**

(43) Veröffentlichungstag der Anmeldung:
08.08.84 Patentblatt 84/32

(45) Bekanntmachung des Hinweises auf die Patenterteilung:
12.08.87 Patentblatt 87/33

(84) Benannte Vertragsstaaten:
**CH DE FR GB LI**

(56) Entgegenhaltungen:
**FR-A-2 056 176**
**FR-A-2 146 716**
**GB-A-2 020 314**
**US-A-3 519 503**

(73) Patentinhaber: **BBC Aktiengesellschaft Brown, Boveri & Cie., Haselstrasse, CH- 5401 Baden (CH)**

(72) Erfinder: **Singer, Robert, Dr., Weite Gasse 14, CH- 5400 Baden (CH)**

LIBER, STOCKHOLM 1987

## Beschreibung

Die Erfindung geht aus von einem Bauteil nach der Gattung des Oberbegriffs des Anspruchs 1 und von einem Verfahren zu dessen Herstellung nach der Gattung des Oberbegriffs der Ansprüche 3, 6 und 8.

Superlegierungen mit Oxyddispersionshärtung haben eine höhere Warmfestigkeit als entsprechende Werkstoffe ohne diese Dispersoide. Aus ihnen gefertigte Bauteile erreichen daher längere Lebensdauern oder können bei höheren Betriebstemperaturen eingesetzt werden. Dies bedingt aber im allgemeinen auch eine verbesserte Beständigkeit gegenüber Hochtemperaturkorrosion, insbesondere gegen Oxydation. Im Interesse höchstmöglicher Dauerstandfestigkeit bei hohen Temperaturen werden die Superlegierungen bevorzugt in grobkörnigem Gefügezustand (am besten mit in der Hauptbeanspruchungsrichtung orientierten Stengelkristallen) eingesetzt.

Es ist andererseits bekannt, dass durch Verringerung der Korngrösse die Oxydations- und Korrosionsbeständigkeit sowie vermutlich die Haftfähigkeit von bestimmten Schutzschichten heraufgesetzt werden kann (C.S.Giggins, F.S. Pettit, "The effect of alloy grain size and surface deformation on the selective oxidation of chromium in nickelchromium alloys at temperatures of 900 and 1100°C", Trans. TMS-AIME, 245, Seite 2509, 1969; P. Huber, O.H.Gessinger, "Materials and coatings to resist high temperature oxidation and corrosion", Conf. Proc., Düsseldorf 1977; T.K.Glasgow, G.J.Santoro, "Oxidation and hot corrosion of coated and bare oxide dispersion strengthened superalloy MA-755 E", Oxid. Met. 15, Seite 251, 1981). Der Weg der Verbesserung der Hochtemperaturkorrosionsbeständigkeit durch Verwendung feinkörniger Werkstoffe wurde indessen nicht beschritten, da dies zu einem unverhältnismässig grossen Verlust an Warmfestigkeit führen würde.

Es besteht daher das Bedürfnis, für hochbeanspruchte Bauteile von thermischen Strömungsmaschinen einen Werkstoff zur Verfügung zu haben, welcher hohe Warmfestigkeit mit erhöhter Oxydationsbeständigkeit verbindet.

Der Erfindung liegt die Aufgabe zugrunde, ein Bauteil aus einer dispersionsgehärteten Superlegierung sowie ein Verfahren, zu dessen Herstellung anzugeben, das die höchstmögliche Ausnutzung der hohen Zeitstandfestigkeit der Superlegierung gewährleistet und gleichzeitig einen möglichst grossen Widerstand gegen Hochtemperaturkorrosion bietet.

Diese Aufgabe wird durch die im kennzeichnenden Teil des Anspruchs 1 und der Ansprüche 3, 6 ud 8 angegebenen Merkmale gelöst. Die Ansprüche 2, 4, 5, 7 und 9 enthalten bevorzugte Lösungen der gestellten Aufgabe.

Die Erfindung wird anhand der nachfolgenden, durch Figuren näher erläuterten Ausführungsbeispiele beschrieben.

Dabei zeigt:

Fig. 1 einen Längsschnitt durch eine Schaufel einer thermischen Strömungsmaschine,

Fig. 2 einen Querschnitt durch eine Schaufel einer thermischen Strömungsmaschine.

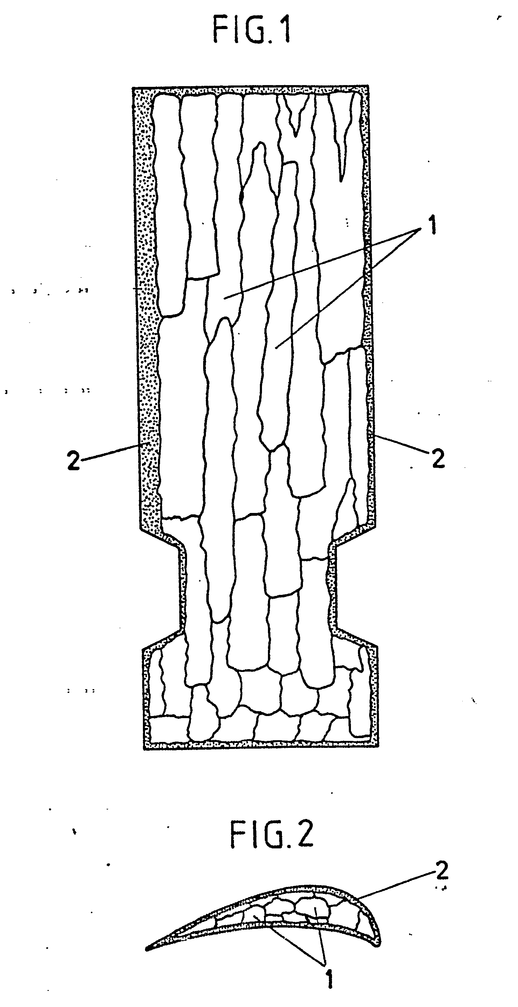

In Fig. 1 ist der Längsschnitt eines Bauteils in Form der Schaufel einer thermischen Strömungsmaschine dargestellt. Das Beispiel bezieht sich insbesondere auf eine Gasturbinenschaufel. 1 stellt den grobkörnigen, hier im wesentlichen aus längsgerichteten Stengelkristallen bestehenden Kern dar. Der Kern 1 ist allseitig von einem die feinkörnige Randzone 2 des Werkstücks darstellenden Mantel eingehüllt. Je nach Grösse und Zusammensetzung sowie Verwendungszweck kann die durchschnittliche Kristallitgrösse im Kern 1 in der Längsrichtung 0,2 bis 50 mm, in der Querrichtung 0,1 bis 10 mm betragen. Die Kristallitgrösse der feinkörnigen Bandzone kann demgegenüber durchschnittliche Werte von 0,1 bis 5 μ annehmen.

Fig. 2 zeigt einen entsprechenden Querschnitt durch das Bauteil gemäss Fig. 1. Der Querschnitt bezieht sich auf das Schaufelblatt. Alle Bezugszeichen entsprechen denjenigen in Fig. 1.

### Ausführungsbeispiel I:

Siehe Fig. 1 und 2.

Aus einem pulvermetallurgisch gefertigten Schmiederohling bestehend aus einer dispersionsgehärteten Nickelbasis-Superlegierung der Markenbezeichnung MA 6000 (Fabrikat Inconel) wurde zunächst eine annähernd dem Enderzeugnis entsprechende Vorform hergestellt. Die Legierung hatte die nachfolgende Zusammensetzung:

Ni = 69 Gew.-%
Cr = 15 Gew.-%
W = 4,0 Gew.-%
Mo = 2,0 Gew.-%
Al = 4,5 Gew.-%
Ti = 2,5 Gew.-%
Ta = 2,0 Gew.-%
C = 0,05 Gew.-%
B = 0,01 Gew.-%
Zr = 0,15 Gew.-%
$Y_2O_3$ = 1,1 Gew.-%

Die Vorform stellte eine Turbinenschaufel von 120 mm Länge, 70 mm Breite und 15 mm maximaler Dicke dar. Das Werkstück wurde in der Weise aufgeheizt, dass sein Kern 1 auf eine Temperatur von 900°C und seine oberflächennahe Randzone 2 auf eine solche von 1100°C gebracht wurde. Nun wurde das Werkstück in ein auf 1050°C vorgewärmtes Schmiedegesenk aus einer Molybdänlegierung (TZM) eingelegt und einer Schmiedeoperation unterworfen, dergestalt, dass die Abnahme an der dicksten Stelle des Schaufelblattes 10 % betrug. Nach der Warmverformung wurde das Werkstück abgekühlt und anschliessend zwecks Rekristallisation des Kerns bei 1280° C während 1 h im Luftumwalzofen geglüht. Danach wurde das Werkstück entgratet. Die Untersuchung ergab im Kern 1 Stengelkristalle von durchschnittlich 200 µ Breite, 50 µ Dicke und 400 µ Länge. Die nicht rekristallisierte, feinkörnige Randzone 2 wies eine durchschnittliche Tiefe von 1 mm auf und wurde durch Kristallite von durchschnittlich 0,4 µ Durchmesser gebildet.

**Ausführungsbeispiel II:**

Ein Schmiederohling der gleichen Zusammensetzung und Abmessung, wie unter Beispiel 1 angegeben, wurde den gleichen Verfahrensschritten, bis auf das Grobkornglühen unterworfen. Letzteres bestand im Unterschied zu Beispiel I in einem Zonenglühen bei 1280° C mit in Längsrichtung des Werkstücks fortschreitender Temperaturfront. Die Vorschubgeschwindigkeit betrug 1 mm/min. der Temperaturgradient 10°/mm. Die Stengelkristalle des Kerns wiesen eine durchschnittliche Breite von 2 mm, eine Dicke von 0,2 mm und eine Länge von 8 mm auf.

**Ausführungsbeispiel III:**

Aus einem Schmiederohling der gleichen Zusammensetzung wie in Beispiel I wurde zunächst eine Vormform ähnlicher Abmessungen und schliesslich eine Fertigform einer Turbinenschaufel isotherm geschmiedet. Hierauf wurde das Werkstück der Strahlung einer Quarzlampe ausgesetzt. Durch Wärmeleitung floss ein Teil der Wärme nach dem Innern des Werkstückes ab. Die Oberfläche wurde unter Einhaltung einer Aufheizgeschwindigkeit von 200° C/min auf eine Endtemperatur von 1140° C gebracht und während 4 min auf dieser Temperatur gehalten. Nach dieser Behandlung wurde das Werkstück abgekühlt und dann während 1 h bei einer Temperatur von 1280° C geglüht. Nach dem Abkühlen konnte eine nicht rekristallisierte, feinkörnige Randzone 2 von 1,2 mm Dicke sowie ein rekristallisierter, grobkörniger Kern 1 festgestellt werden. Siehe Fig. 1 und 2:

**Ausführungsbeispiel IV:**

Aus einer dispersionsgehärteten Nickelbasis-Superlegierung wurde eine Laufradschaufel für eine rotierende thermische Maschine gepresst. Die Legierung hatte folgende Zusammensetzung:

C = 0,11 Gew.-%
Co = 8,5 Gew.-%
Cr = 16 Gew.-%
Mo = 1,75 Gew.-%
W = 2,60 Gew.-%
Tr = 1,75 Gew.-%
Nb = 0,9 Gew.-%
Al = 3,4 Gew.-%
Ti = 3 4 Gew.-%
B = 0,01 Gew.-%
Zr = 0,05 Gew.-%
Ni = Rest

Die 70 mm lange, 35 mm breite und 8 mm dicke Schaufel wurde mittels einer Mittelfrequenz-Heizanlage induktiv erwärmt. Die Frequenz betrug 1 kHz. Um die Randzone des Werkstückes kälter zu halten als den Kern, wurde dessen Oberfläche gleichzeitig durch ein Gebläse kräftig gekühlt. Der Prozess wurde so geführt, dass im Kern eine Temperatur von 1230 bis 1280° C herrschte, während die Randzone auf 1140° C gehalten wurde. Dabei blieb die Randzone feinkörnig, während der Kern zu Grobkorn rekristallisierte. Erstere wies eine durchschnittliche Dicke von 0,3 mm auf.

Das beschriebene Verfahren ermöglicht es, Bauteile herzustellen, welche im Kern 1 eine durchschnittliche Kristallitgrösse in der Längsachse von 0,2 bis 50 mm, in der Querachse von 0,1 bis 10 mm sowie in der einen Mantel bildenden feinkörnigen Randzone 2 von 0,1 bis 5 µ Durchmesser aufweisen. Letztere kann eine Dicke (Tiefe) von 20 bis 2000 µ aufweisen. Das Verfahren ist insbesondere für die Herstellung von Schaufeln für thermische Strömungsmaschinen geeignet. Ausgegangen wird stets von einem feinkörnigen Grundzustand des Werkstücks, wie er für die vorangehenden Formgebungsprozesse ohnehin erwünscht ist. Durch die nachfolgende thermische und/oder thermomechanische Behandlung wird dafür gesorgt, dass der Kern 1 eine Gefügeänderung in Form einer Grobkornbildung erleidet, während die Randzone 2 (Mantel) an der Rekristallisation gehindert wird und feinkörnig bleibt.

Diese Behandlung kann darin bestehen, dass das Werkstück in seiner Randzone 2 dicht unter die Rekristallisationstemperatur aufgeheizt wird, während sein Kern 1 auf einer um 150 bis 350° C tieferen Temperatur zu verbleiben hat. Nun kann durch Schmieden in einem um höchstens 350° C unter der Rekristallisationstemperatur gehaltenen, vorgewärmten Gesenk weiter verfahren werden, wobei die Abnahme an der dicksten Stelle des Werkstückprofils 10 bis 30 % betragen soll. Anschliessend wird oberhalb der Rekristallisationstemperatur geglüht. Wird diese Glühbehandlung als Zonenglühprozess durchgeführt, so kann der Vorschub vorteilhafterweise 1 mm/min, der Temperaturgradient 10° C/mm betragen. Das Werkstück kann auch unterhalb der Rekristallisationstemperatur fertig geschmiedet und anschliessend mittels Strahlung einer Quarzlampe unter gleichzeitiger Wärmeleitung nach dem Innern hin mit einer Geschwindigkeit von 50 bis 250°C/min auf einen knapp unterhalb der Rekristallisationstemperatur befindlichen Wert aufgeheizt und während höchstens 30 min in diesem Zustand belassen werden. Die Schmiedeoperation kann mit Vorteil isotherm durchgeführt werden. Nach einer weiteren Variante des Verfahrens kann das Werkstück induktiv erwärmt werden und gleichzeitig durch Strahlung und/oder Konvektion an der Oberfläche gekühlt werden, dergestalt, dass der Kern 1 auf eine Temperatur oberhalb der Rekristallisationstemperatur gebracht wird, während die Randzone 2 dank der Oberflächenkühlung unterhalb derselben bleibt. Durch Wahl der Frequenz, welche die Eindringtiefe des magnetischen Feldes bestimmt, sowie der Intensität der Kühlung können die Betriebsparameter der Form und Grösse des Werkstücks angepasst werden, um den gewünschten, gegen die Oberfläche zu gerichteten fallenden Temperaturgradienten zu erhalten. Es versteht sich von selbst, dass bei allen Verfahrensvarianten die zur Grobkornbildung im Kern 1 notwendige Rekristallisationsglühung als Zonenglühen durchgeführt werden kann.

**Patentansprüche**

1. Bauteil mit hoher Korrosions- und Oxydationsbeständigkeit bestehend aus einer dispersionsgehärteten Superlegierung, dadurch gekennzeichnet, dass es aus einem grobkörnigen Kern (1) mit einer durchschnittlichen Kristallitgrösse in der Längsachse von 0,2 bis 50 mm und in der Querachse von 0,1 bis 10 mm und einer einen Mantel bildenden feinkörnigen Randzone (2) von 20 bis 2000 μm Dicke mit einer durchschnittlichen Kristallitgrösse von 0,1 bis 5 μm aufgebaut ist.

2. Bauteil nach Anspruch 1, dadurch gekennzeichnet, dass es eine Schaufel einer thermischen Strömungsmaschine ist.

3. Verfahren zur Herstellung eines Bauteils mit hoher Korrosions- und Oxydationsbeständigkeit, bestehend aus einer dispersionsgehärteten Superlegierung, dadurch gekennzeichnet, dass, ausgehend von einem feinkörnigen Grundzustand das Werkstück zunächst in seiner Randzone (2) auf eine Temperatur dicht unterhalb der Rekrisallisationstemperatur des Werkstoffs aufgeheizt wird, während dessen Kern (1) auf einer um 150 bis 350°C tieferen Temperatur gehalten wird, dass das derart auf über den Querschnitt unterschiedlichen Temperaturen erwärmte Werkstück in einem auf eine höchstens um 350°C unter der Rekristallisationstemperatur vorgewärmten Gesenk mit einer Abnahme an der dicksten Stelle seines Profils um 10 bis 30 % geschmiedet und anschliessend einer Glühbehandlung oberhalb der Rekristallisationstemperatur unterzogen wird.

4. Verfahren nach Anspruch 3, dadurch gekennzeichnet, dass das Werkstück in seiner Randzone (2) auf eine Schmiedetemperatur von 1100°C und im Kern (1) auf eine solche von 900°C erhitzt und in einem Gesenk mit einer Temperatur von 1050°C unter einer Querschnittsabnahme von 10 % an der dicksten Stelle seines Profils geschmiedet und anschliessend bei einer Temperatur von 1280°C geglüht wird.

5. Verfahren nach Anspruch 4, dadurch gekennzeichnet, dass das Werkstück am Schluss bei einer Temperatur von 1280°C einem Zonenglühprozess mit in Längsrichtung fortschreitender Temperaturfront unterworfen wird, wobei die Vorschubgeschwindigkeit 1 mm/min und der Temperaturgradient 10°C/mm beträgt.

6. Verfahren zur Herstellung eines Bauteils mit hoher Korrosions- und Oxydationsbeständigkeit, bestehend aus einer dispersionsgehärteten Superlegierung, dadurch gekennzeichnet, dass, ausgehend von einem feinkörnigen Grundzustand das Werkstück zunächst unterhalb der Rekristallisationstemperatur geschmiedet und in seiner Randzone (2) mittels Strahlung einer Quarzlampe unter gleichzeitiger Wärmeleitung mit einer Aufheizgeschwindigkeit von 50 bis 250°C/min auf eine Temperatur knapp unter der Rekristallisationstemperatur erwärmt, auf dieser Temperatur während höchstens 30 min gehalten wird, und dass hierauf das Werkstück einer Glühbehandlung oberhalb der Rekristallisationstemperatur unterzogen wird.

7. Verfahren nach Anspruch 6, dadurch gekennzeichnet, dass das Werkstück isotherm geschmiedet und in seiner Randzone (2) mit einer Aufheizgeschwindigkeit von 200°C/min auf eine Temperatur von 1140°C gebracht und auf dieser Temperatur während 4 min gehalten wird, und dass das Werkstück hierauf während 1 h bei einer Temperatur von 1280°C geglüht wird.

8. Verfahren zur Herstellung eines Bauteils mit hoher Korrosions- und Oxydationsbeständigkeit, bestehend aus einer dispersionsgehärteten Superlegierung, dadurch gekennzeichnet, dass ausgehend von einem feinkörnigen Grundzustand das Werkstück induktiv erwärmt und dessen Randzone gleichzeitig gekühlt wird, derart, dass der Kern (1) auf eine Temperatur oberhalb der Rekristallisationstemperatur gebracht wird, während die Randzone (2) knapp unterhalb derselben gehalten wird.

9. Verfahren nach Anspruch 8, dadurch gekennzeichnet, dass das Werkstück im Kern (1) auf einer Temperatur von 1230 bis 1280°C und in der Randzone (2) auf einer solchen von 1140°C gehalten wird.

**Claims**

1. Component of high corrosion and oxidation resistance, consisting of a dispersion-hardened superalloy, characterized in that it is built up from a coarse-grain core (1) with an average crystallite size of 0.2 to 50 mm in the longitudinal axis and of 0.1 to 10 mm in the transverse axis and from a fine-grain margin zone (2), forming a shell, of 20 to 2,000 µm thickness and an average crystallite size of 0.1 to 5 µm.

2. Component according to Claim 1, characterized in that it is a blade of a thermal turbo-machine.

3. Process for producing a component of high corrosion and oxidation resistance, consisting of a dispersion-hardened superalloy, characterized in that, starting from a fine-grain original state, the workpiece is first heated in its margin zone (2) to a temperature just below the recrystallization temperature of the material, while its core (1) is held at a temperature which is lower by 150 to 350°C, that the workpiece, which has thus been heated to different temperatures over its cross-section, is forged in a die, which has been preheated to a temperature which is at most 350°C below the recrystallization temperature, with a decrease of its profile by 10 to 30 % at its thickest part and is then subjected to a heat treatment above the recrystallization temperature.

4. Process according to Claim 3, characterized in that the workpiece is heated in its margin zone (2) to a forging temperature of 1,100°C and in the core (1) to a forging temperature of 900°C and is forged in a die at a temperature of 1,050°C with a decrease in cross-section by 10 % at the thickest part of its profile and is then heat-treated at a temperature of 1,280°C.

5. Process according to Claim 4, characterized in that the workpiece is finally subjected at a temperature of 1,280°C to a zone-heating process with a temperature front progressing in the longitudinal direction, the speed of advance being 1 mm/min and the temperature gradient being 10°C/mm.

6. Process for producing a component of high corrosion and oxidation resistance, consisting of a dispersion-hardened superalloy, characterized in that, starting from a fine-grain original state, the workpiece is first forged below the recrystallization temperature and is heated in its margin zone (2) by means of the radiation of a quartz lamp with simultaneous heat conduction at a heating rate of 50 to 250°C/min to a temperature just below the recrystallization temperature, is held for at most 30 min at this temperature, and that the workpiece is then subjected to a heat treatment above the recrystallization temperature.

7. Process according to Claim 6, characterized in that the workpiece is forged isothermally and its margin zone (2) is brought to a temperature of 1,140°C at a heating rate of 200°C/min and is held for 4 min at this temperature, and that the workpiece is then heat-treated for 1 hour at a temperature of 1,280°C.

8. Process for producing a component of high corrosion and oxidation resistance, consisting of a dispersion-hardened superalloy, characterized in that, starting from a fine-grain original state, the workpiece is inductively heated and its margin zone is simultaneously cooled in such a way that the core (1) is brought to a temperature above the recrystallization temperature, whereas the margin zone (2) is held just below the latter.

9. Process according to Claim 8, characterized in that the core (1) of the workpiece is held at a temperature of 1,230 to 1,280°C and the margin zone (2) is held at a temperature of 1,140°C.

## Revendications

1. Elément de construction avec une résistance élevée à la corrosion et à l'oxydation, se composant d'un superalliage durci par dispersion, caractérisé en ce qu'il est constitué d'un coeur (1) à gros grain avec une taille moyenne de cristaux de 0,2 à 50 mm selon l'axe longitudinal et de 0,1 à 10 mm selon l'axe transversal et d'une zone périphérique (2) à grain fin, formant une enveloppe, d'une épaisseur de 20 à 2000 µm avec une taille moyenne de cristaux de 0,1 à 5 µm.

2. Elément de construction suivant la revendication 1, caractérisé en ce que cet élément est une aube d'une turbomachine thermique.

3. Procédé pour la fabrication d'un élément de construction avec une résistance élevée à la corrosion et à l'oxydation, se composant d'un superalliage durci par dispersion, caractérisé en ce que, à partir d'un état initial à grain fin, la pièce est d'abord chauffée dans sa zone périphérique (2) à une température située juste sous la température de recristallisation du matériau, tandis que son coeur (1) est maintenu à une température plus basse de 150 à 350°C, en ce que la pièce ainsi chauffée à des températures différentes sur sa section est forgée, dans une matrice préchauffée à une température située au maximum à 350°C sous la température de recristallisation, avec une diminution de 10 à 30 % à l'endroit le plus épais de son profil et est ensuite soumise à un traitement de recuit au-dessus de la température de recristallisation.

4. Procédé suivant la revendication 3, caractérisé en ce que la pièce est chauffée à une température de forgeage de 1100°C dans sa zone périphérique (2) et à une température de forgeage de 900°C dans son coeur (1) et est forgée dans une matrice se trouvant à une température de 1050°C avec une réduction de section de 10 % à l'endroit le plus épais de son profil et est ensuite recuite à une température de 1280°C.

5. Procédé suivant la revendication 4, caractérisé en ce que la pièce est finalement soumise à une opération de recuit de zone avec un front de température progressant en direction longitudinale, la vitesse de progression étant de 1 mm/min et le gradient de température étant de 10°C/mm.

6. Procédé pour la fabrication d'un élément de construction avec une résistance élevée à la corrosion et à l'oxydation, se composant d'un superalliage durci par dispersion, caractérisé en ce que, à partir d'un état initial à grain fin, la pièce est d'abord forgée sous sa température de recristallisation et sa zone périphérique (2) est chauffée, au moyen du rayonnement d'une lampe à quartz avec conduction-calorifique simultanée, avec une vitesse de chauffage de 50 à 250°C/min, jusqu'à une température située juste sous la température de recristallisation, en ce qu'elle est maintenue à cette température pendant 30 min au maximum et en ce qu'ensuite la pièce est soumise à un traitement de recuit au-dessus de la température de recristallisation.

7. Procédé suivant la revendication 6, caractérisé en ce que la pièce est forgée isothermiquement et est portée à une température de 1140°C dans sa zone périphérique (2) avec une vitesse de chauffage de 200°C/min et est maintenue à cette température pendant 4 min, et en ce que la pièce est ensuite recuite pendant 1 h à une température de 1280°C.

8. Procédé pour la fabrication d'un élément de construction avec une résistance élevée à la corrosion et à l'oxydation, se composant d'un superalliage durci par dispersion, caractérisé en ce que, à partir d'un état initial à grain fin, la pièce est chauffée par induction et sa zone périphérique est en même temps refroidie, de sorte que le coeur (1) est porté à une température supérieure à la température de recristallisation tandis que la zone périphérique (2) est maintenue juste sous celle-ci.

9. Procédé suivant la revendication 8, caractérisé en ce que la pièce est maintenue à une température de 1230 à 1280°C, dans son coeur (1) et à une température de 1140°C dans sa zone périphérique (2).

# FIG.1

# FIG.2